# EUROPÄISCHE PATENTSCHRIFT

(11) **EP 3 078 256 B1**
(45) Veröffentlichungstag und Bekanntmachung des Hinweises auf die Patenterteilung: **13.06.2018**
(21) Anmeldenummer: 16163468.8
(22) Anmeldetag: 01.04.2016
(51) Int. Cl.: A01F 25/18, A01C 3/06, A01D 90/10

(54) **LANDWIRTSCHAFTLICHER ERNTEWAGEN MIT DOSIERGERÄT UND BREITVERTEILUNG**
AGRICULTURAL HARVEST WAGON WITH DOSING APPARATUS AND BROAD DISTRIBUTION
CHARIOT DE RECOLTE COMPRENANT UN APPAREIL DE DOSAGE ET D'EPANDAGE

(30) Priorität: 09.04.2015 DE 102015004325
(43) Veröffentlichungstag der Anmeldung: 12.10.2016
(73) Patentinhaber: B. Strautmann & Söhne GmbH u. Co. KG, 49196 Bad Laer (DE)
(72) Erfinder: Altenbuchner, Josef, 5122 Hochburg - Ach (AT)
(74) Vertreter: Träger, Denis

(56) Entgegenhaltungen:
- EP-A1- 2 567 606
- WO-A2-2014/035825
- DE-A1- 2 652 738
- DE-A1- 19 952 079
- DE-A1-102010 013 557
- DE-U1-202007 012 649
- FR-A1- 2 865 346

## Beschreibung

Die Erfindung betrifft einen landwirtschaftlichen Erntewagen für Halm- und Blattgut, umfassend:
- ein sich über Räder zum Erdboden hin abstützendes Fahrgestell zur Aufnahme eines Laderaums, welcher gebildet ist aus längsseitigen Seitenwänden, einer die Seitenwände verbindenden Vorderwand sowie einer schwenkbaren Heckklappe zum Verschließen einer rückwärtigen Entladeöffnung;
- ein im Laderaum vor der Heckklappe angeordnetes Dosiergerät mit wenigstens zwei Fräswalzen;
- einen Laderaumboden mit einer angetriebenen Entladeeinrichtung für das rückwärtige Entladen des Halm- und Blattgutes zur Bildung einer Futterschicht.

Bei den Erntewagen handelt es sich vorzugsweise um einen Lade- oder Häckselwagen.

Das Dokument EP 2 567 606 A1 offenbart einen Miststreuer. Er enthält eine Dosiereinrichtung, sowie auch eine Heckklappe, welche unmittelbar als Breitverteilungseinrichtung fungiert.

Aus der Schrift DE 10 2010 013 557 A1 der Anmelderin ist beispielsweise ein Ladewagen bekannt, welcher mittels einer Aufnahmevorrichtung Halm- und Blattgut erfasst und zu einer nachgeordneten Press- und Schneidvorrichtung weiterleitet. Die Press- und Schneidvorrichtung zerkleinert das Erntegut und fördert es in einen nachgeordneten Laderaum. Die Beladung wird so lange fortgesetzt, bis das im Laderaum befindliche Erntegut mittels Unterstützung des Kratzbodens ein im Fahrzeugheck angeordnetes Dosiergerät erreicht. Das Dosiergerät weist in der Regel zwei oder drei Fräswalzen auf und dient der heckseitigen Entladung des Erntewagens.

Bei einem Häckselwagen erfolgt die Befüllung des Laderaums über dessen offene Oberseite durch Einblasen des von einem Feldhäcksler geernteten Futters. Hierbei gelangt auch Futter hinter die während der Beladung still stehenden Fräswalzen und kann diese umschließen.

Das vom Kratzboden gegen die Fräswalzen gepresste sowie das durch Verwirbelungen hinter die Fräswalzen gelangte Erntegut übt einen Widerstand auf die Fräswalzen aus, der insbesondere das Anlaufen der Fräswalzen bei der Entladung des Erntewagens erschwert. Dieser Widerstand erhöht sich zudem dadurch, dass das Erntegut sich während des Transports vom Ernteeinsatz zu einem für das Erntegut vorgesehen Vorratslager durch das Eigengewicht der Ladung in Verbindung mit Fahr-Erschütterungen weiter verdichtet.

Zur Entladung des Erntewagens werden nach Öffnen der Heckklappe der Fräswalzen- sowie der Kratzbodenantrieb gestartet. Anschließend wird das Erntegut bei langsamer Fahrt in Form einer teppichartigen Futterschicht hinter dem Erntefahrzeug abgelegt.

Erntewagen hoher Ladeleistung sind im Allgemeinen mit Rädern ausgerüstet, deren äußere Begrenzungen gegenüber der lichten Breite des Laderaums und der gleichen lichten Breite des Dosieraggregats beidseitig hervorragen. Die Breite des Dosiergerätes ist jedoch an die Breite des Laderaums und nicht an die Gesamt-Fahrzeugbreite angepasst. Auch die abgelegte Futterschicht weist somit eine Breite auf, die der Breite des Dosiergerätes und nicht der Gesamt-Fahrzeugreite entspricht.

Zwischen den Rändern des Futterteppichs und der äußeren seitlichen Begrenzung des Erntewagens verbleibt somit jeweils ein Randstreifen, der beim Entladen nicht, bzw. nur ungenügend, mit Futter bedeckt wird. Dies hat insbesondere in Fahrsilos, die mit Stützwänden ausgestattet sind, merkliche Nachteile. Selbst wenn der Erntewagen mit seinen Rädern unmittelbar an der Stützwand entlangfährt, wird der Bereich an der Stützwand nur unzureichend mit Erntegut belegt. Die mangelhafte Futterablage in den Randstreifen verhindert in diesem Bereich eine akkurate Verdichtung und begünstigt Luft- und Sauerstoffeinschlüsse im Futterlager. Die Luft- und Sauerstoffeinschlüsse wiederum führen zu Nachgärungsprozessen und damit einhergehend zu minderer Futterqualität und erheblichen Verlusten durch Bildung von Schimmel und/oder stark riechender Essig- und Buttersäure. Dies wirkt sich sowohl auf die Tiergesundheit als auch auf die Leistungsfähigkeit der Tiere negativ aus.

Aufgabe der Erfindung ist es deshalb, einen Erntewagen vorzugschlagen, der bei der Entladung eine verbreiterte Futterschicht ablegt.

Die erfindungsgemäße Aufgabe wird gelöst, indem am Erntewagen eine Breitverteileinrichtung vorgesehen ist, welche Teilmengen des zu entladenden Halm- und Blattgutes in die sich an die lichte Breite von Dosiergerät und Laderaum anschließenden Bereiche befördert, so dass die Futterschicht eine Breite aufweist, die der Fahrzeugbreite entspricht.

Bei Erntewagen, bei denen die Breite des Laderaums und/oder die Breite des an den Laderaum anschließenden Dosiergerätes kleiner ist, als die Breite der Fahrzeugbereifung, ermöglicht die erfindungsgemäße Breitverteileinrichtung eine verbesserte Futterablage. Ein solcher Einsatzfall kann zum Beispiel durch gesetzlich unterschiedliche Vorgaben hinsichtlich der zulässigen Breite von Bereifung und Fahrzeugaufbau resultieren. So kann die maximal zulässige Fahrzeugbreite beispielsweise 2,55 Meter und die zulässige Breite einer Niederdruck-Fahrzeugbereifung 3,00 Meter betragen. Eine Anpassung der Laderaum- bzw. Dosiergerätbreite an die Breite der Bereifung ist in diesem Fall nicht möglich. Erfindungswesentlich ist deshalb, dass die Breitverteileinrichtung die abzulegende Futterschicht nicht nur heckseitig ablegt, sondern dabei auseinanderzieht.

In einer bevorzugten Ausführungsform wird die Breitverteileinrichtung durch Leitschienen ausgebildet, welche an der Innenseite der Heckklappe angeordnet sind. Dabei handelt es sich vorzugsweise um paarweise angebrachte Leitschienen, welche eine symmetrische, beidseitige Verbreiterung der ausgebrachten Futterschicht bewirken.

Die Heckklappe kann mehrteilig ausgeführt sein. Insbesondere kann die Heckklappe eine im Wesentlichen senkrechte Rückwand sowie eine sich an die senkrechte Rückwand anschließende Bodenklappe umfassen. Die Leitschienen können an der Rückwand und/oder an der Bodenklappe angeordnet sein. Wesentlich für die Leitschienen ist, dass sie das von den Fräswalzen zugeführte Futter unter Ausnutzung der Schwerkraft zur Seite leiten. Die Leitschienen bilden an der Innenseite der Heckklappe somit vorzugsweise ein umgekehrtes V mit von der Mitte zum Außenrand abfallenden Schenkeln. An Stelle von zwei Leitschienen, die ein umgekehrtes V bilden, können auch zwei, drei oder mehr Paar von Leitschienen übereinander vorgesehen sein und eine Art Fischgrät-Muster bilden.

Je nach gewünschter bzw. zu erzielender Futterschichtbreite können die Leitschienen unterschiedliche Längen aufweisen und/oder in unterschiedlichen Winkeln angeordnet sein. So können beispielsweise kurze Leitschienen im Randbereich der Heckklappe vorgesehen sein, die die Futterschichtbreite um wenige Zentimeter verbreitern oder längere Leitschienen, die eine entsprechend größere Verbreiterung bewirken.

Zur Verbesserung der Leitwirkung und in Abhängigkeit von den Einsatzbedingungen können die Leitschienen linear ausgeführt sein. Alternativ hierzu können auch ganz oder teilweise bogenförmig ausgeführte Leitschienen vorgesehen sein.

In einer bevorzugten Ausführungsform sind beidseitig an der Heckklappe schwenkbare Seitenklappen angeordnet. Bei geschlossener Heckklappe sind die Seitenklappen in etwa senkrecht zur Rückwand ausgerichtet und dichten den Bereich zwischen Rückwand und Dosiergerät seitlich ab. Bei geöffneter Heckklappe können die Seitenklappen soweit geschwenkt werden, dass sie mit der Innenseite der Rückwand in einer Ebene liegen. Das an den Leitschienen entlang gleitende Futter trifft somit nicht auf hervorstehende Seitenklappen, sondern gleitet vielmehr auch an den Seitenklappen entlang. Zur weiteren Unterstützung der Breitverteilung können an den Seitenklappen kurze Leitschienen vorgesehen sein, die die Leitschienen der Heckklappe fortsetzen, so dass der Breitverteileffekt verstärkt wird.

Über die Seitenklappen kann, in Abhängigkeit von deren Schrägstellung, zudem die Breitverteilung des Futters reguliert bzw. begrenzt werden. Verluste von Futter, welches über die Seitenwände des Fahrsilos entweichen könnte, können so vermieden werden.

Alternativ oder zusätzlich zu den Leitschienen kann eine Breitverteileinrichtung auch durch die Fräswalzen, insbesondere durch eine spezielle Gestaltung der auf den Fräswalzen angebrachten Zinken ausgebildet sein. Vorzugsweise weisen zumindest einige Zinken eine Leitfläche auf, die derart ausgerichtet ist, dass bei Rotation der Fräswalzen von den Zinken erfasstes Halm- und Blattgut auch zur Seite hin bewegt bzw. geschleudert wird.

Alternativ oder zusätzlich können die auf den Fräswalzen angeordneten Zinken gegenläufige Schneckengänge bilden, so dass eine Teilmenge des zu entladenden Halm- und Blattguts jeweils von der Mitte in Richtung der Seitenbereichen geleitet wird und eine Verbreiterung der Futterschicht bewirkt.

Unabhängig davon, ob der Erntewagen mit einer Breitverteileinrichtung ausgerüstet ist, kann vorgesehen sein, dass das Dosiergerät ein schwenkbares Rahmenteil umfasst, welches die Fräswalzen trägt. Das schwenkbare Rahmenteil ist im oberen Bereich des Rahmengestells oder des Laderaums mittels Drehbolzen gelagert und gegenüber dem Laderaum um einen Winkel α schwenkbar. Vorzugsweise wird das schwenkbare Rahmenteil durch Schließen der Heckklappe in einer Ruheposition fixiert. Bei Öffnen der Heckklappe schwenkt auch das Rahmenteil um den genannten Winkel α aus.

Das Ausschwenken kann beispielsweise durch wenigstens eine Feder bewirkt werden. Vorzugsweise handelt es sich bei der wenigstens einen Feder um eine Druckfeder, welche im unteren Bereich des schwenkbaren Rahmenteils angeordnet ist und das Bestreben hat, das Rahmenteil um den Winkel α auszuschwenken.

Durch das Ausschwenken wird ein zusätzlicher Freiraum geschaffen bzw. eine Entspannung des im Schwenkbereich befindlichen Ernteguts bewirkt. Die Fräswalzen können somit mit ihren Zinken aus dem verdichteten bzw. verfestigten Erntegut herausschwenken. Hierdurch reduziert sich bei der Entladung der Anlaufwiderstand von Kratzboden und Fräswalze.

In einer bevorzugten Ausführungsform ist das Dosiergerät in einem Rahmengestell angeordnet, welches mit Schnellverschlüssen mit dem Erntewagen verbunden ist. Das Rahmengestell ist vorzugsweise so an den Laderaum gekoppelt, dass es nach Lösen der Schnellverbindung und nach Trennung des Fräswalzen-Antriebs beispielsweise mittels eines Traktor-Frontladers oder eines Gabelstaplers aus seiner Verankerung herausgehoben werden kann. Beispielsweise können am Rahmengestell Tragbolzen und am Laderaum Aufnahmen für die Tragbolzen vorgesehen sein. Die Ausrüstung des Erntewagens kann weiterhin ein Dummy-Rahmengestell umfassen, welches im Austausch gegen das die Fräswalzen tragende Rahmengestell in den Erntewagen einbaubar ist. Das Dummy-Rahmengestell ist kompatibel zum Fräswalzen-Rahmengestell, weist jedoch keine Fräswalzen auf und hat deshalb ein reduziertes Eigengewicht. Der Erntewagen kann somit einfach umgerüstet und an unterschiedliche Erntebedingungen angepasst werden: Wenn die Beschaffenheit des Erntegutes einen Verzicht auf das Dosiergerät erlaubt, kann dieses mit wenig Aufwand entfernt werden um so die Nutzlast und das nutzbare Laderaumvolumen zu erhöhen.

Besonders bevorzugt ist eine Ausführungsform, bei der das Rahmengestell mit Fräswalzen sowie das Dummy-Rahmengestell eine Aufnahmeeinrichtung zur Anbindung an ein Tragegerät aufweisen. Bei der Aufnahmeeinrichtung kann es sich beispielsweise um Aufnahmetaschen für Gabelstapler- oder Frontladerzinken handeln.

Die Erfindung wird nachstehend an einem Beispiel näher beschrieben und in den Zeichnungen dargestellt.
- Fig. 1 zeigt: die Seitenansicht eines Ladewagens mit Dosiergerät;
- Fig. 2 zeigt: den Querschnitt eines Erntewagens im Querschnitt eines Fahrsilos;
- Fig. 3 zeigt: den Heckbereich des Ladewagens aus Fig. 1 in perspektivischer Ansicht mit einem zweiteiligen Rahmengestell;
- Fig. 4 zeigt: eine Ansicht des Dosiergerätes mit geschlossener und geöffneter Heckklappe mit einteiligem Rahmengestell;
- Fig. 5 zeigt: eine Ansicht auf die mit Leitschienen besetzte Innenseite der Heckklappe;
- Fig. 6 zeigt: einen Schnitt durch die Heckklappe

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht näher beschriebenen Kombinationen zusammengeführt werden können.

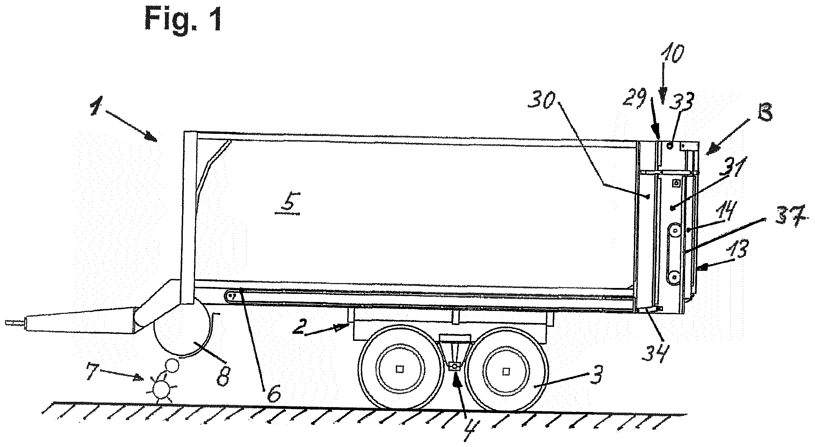

Figur 1 zeigt einen Erntewagen 1, hier dargestellt als gezogener Ladewagen, an dessen hinterem Ende ein Dosiergerät 10 angeordnet ist.

Der Ladewagen 1 umfasst im Wesentlichen ein Fahrgestell 2, welches von der mit Rädern 3 versehenen Achsvorrichtung 4 getragen wird und einen mit einem Kratzboden 6 versehenen Laderaum 5. Der Laderaum 5 wird über eine Pressvorrichtung 8, der das Futter von der Aufnahmevorrichtung 7 zugeführt wird, befüllt.

Das am Ende des Laderaums 5 angebrachte Dosiergerät 10 umfasst ein Rahmengestell 29 mit einem festen Rahmenteil 30 und einem schwenkbaren Rahmenteil 31. Die Schwenkbewegung erfolgt um eine Drehachse, die durch eine Lagerung 33 definiert wird. Die Schwenkbewegung wird bei geöffneter Heckklappe 13 über die Schwerpunktlage und/oder eine, gegebenenfalls zusätzlichen, Druckfeder 34 bewirkt. Alternativ zur Druckfeder 34 kann auch ein Hydraulikzylinder oder ein Rasthebel vorgesehen sein. Die Entriegelung und Verriegelung des Rasthebels erfolgt mittels Schließen der Heckklappe.

Die über die Lagerung 33 aneinander gekoppelten Rahmenteile 30 und 31 bilden nach der Schwenkbewegung einen Winkel a. Der Winkel a wird durch den Federweg der Druckfeder 34 definiert und ist so gewählt, dass beim Anlaufen der Fräswalzen 11 der durch die in die Ladung greifenden Zinken 12 bedingte Anlaufwiderstand keine Behinderung darstellt. Soweit zur Durchführung der Schwenkbewegung ein Hydraulikzylinder vorgesehen ist, ist der Winkel α variabel und kann ggf. nach Anlaufen der Fräswalzen 11 und somit nach Überwindung des Anfangswiderstands geschlossen werden.

Am schwenkbaren Rahmenteil 31 ist eine schwenkbare Heckklappe 13 angebracht, die mittels der Hydraulikzylinder 18 vor dem Anlaufen der Fräswalzen 11 geöffnet wird. Alternativ hierzu kann die Heckklappe 13 auch an das feste Rahmenteil 30 gekoppelt sein.

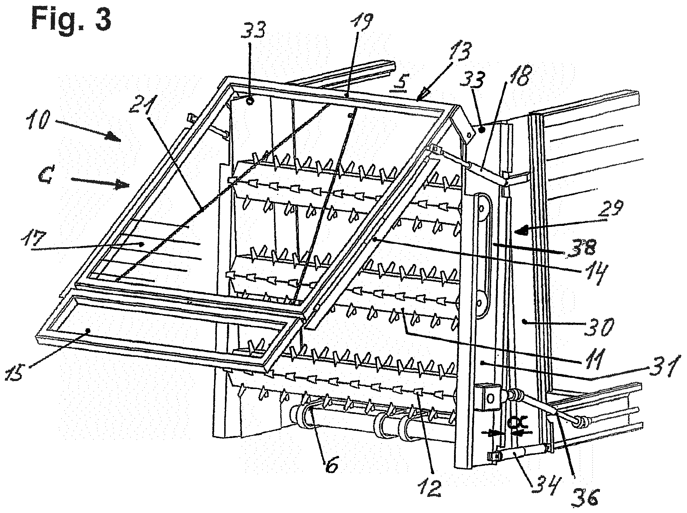

Figur 3 zeigt den Heckbereich des Erntewagens aus Figur 1 in einer perspektivischen Ansicht. Das Dosiergerät 10 weist drei Fräswalzen 11 auf. Die untere Fräswalze 11 ist an einen Gelenkwellenantrieb 36 gekoppelt. Die untere Fräswalze 11 ist weiterhin mit der mittlere Fräswalze 11 über eine Antriebskette 37 verbunden. Analog hierzu ist an der anderen Fahrzeugseite die mittlere Fräswalze 11 mit der oberen Fräswalze 11 über eine Antriebskette 38 verbunden, so dass im Ergebnis der Gelenkwellenantrieb 36 alle drei Fräswalzen 11 antreibt.

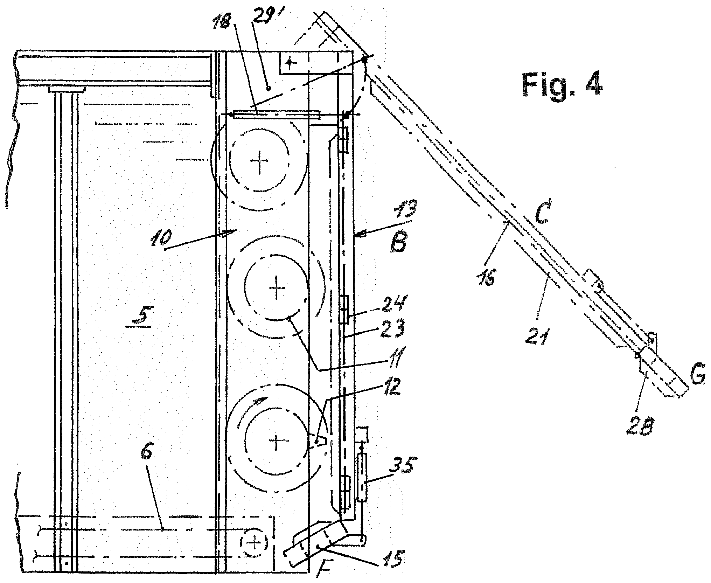

Die Heckklappe 13 umfasst einen Rahmen 19 mit einer Rückwand 17 sowie einer schwenkbare Bodenklappe 15, die unterhalb der Rückwand 17 angeordnet ist. Während der Beladung und während des Transports befindet sich die Bodenklappe 15 in einer Stellung F und schließt den Bereich zwischen Kratzboden 6 und Rückwand 17, so dass Futterverluste verhindert werden. Die Bodenklappe 15 kann mittels eines Hydraulikzylinders 35 von der Stellung F in eine Stellung G geschwenkt werden (vergl. Fig. 4). In Stellung G bildet die Innenseite der Bodenklappe 15 mit der Innenseite 16 der Rückwand 17 eine Ebene.

An der Heckklappe 13 ist beidseitig je eine Seitenklappe 14 angeordnet. Bei geschlossener Heckklappe 13 dichten die Seitenklappen 14 den Laderaum 5 ab.

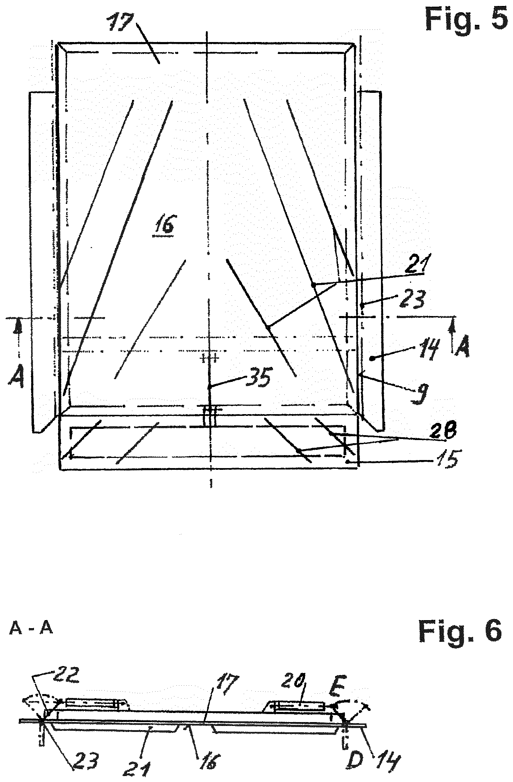

Wie Fig. 6 zeigt sind die Seitenklappen 14 aus einer rechtwinklig zur Innenseite 16 der Rückwand 17 ausgerichteten Position D in eine Position E schwenkbar. In Position E verbreitern die Seitenklappen 14 die Rückwand 17. Die Innenseite 16 der Rückwand 17 und die Innenseite der Seitenklappen 14 liegen in Position E in einer gemeinsamen Ebene. Die Schwenkbewegung erfolgt um Gelenke 24, die auf einer Gelenkachse 23 angeordnet sind. Die Schwenkbewegung wird durch Hydraulikzylinder 20 ausgeführt, die an Hebeln 22 angreifen, die mit der Gelenkachse 23 verbunden sind.

Alternativ hierzu können auch ein Gestänge oder Seilzüge und Federn vorgesehen sein. Der hierdurch bewirkte Bewegungsablauf der Seitenklappen 14 entspricht dem vom Hydraulikzylinder 20 bewirkten Bewegungsablauf.

Die Bodenklappe 15 kann weiterhin eine Verriegelung aufweisen, welche bei geschlossener Heckklappe 13 für den Transport bzw. Straßenfahrten eine formschlüssige Verriegelung zwischen Bodenklappe 15 und Laderaum 5 sicherstellt.

Die Rückwand 17 ist auf ihrer Innenseite 16 mit Leitschienen 21 besetzt. Die Bodenklappe 15 kann ebenfalls mit Leitschienen 28 besetzt sein (vergl. Fig. 5).

Zum Entladen des Erntewagens 1 wird die Heckklappe 13 aus der Schließstellung B (vergl. Fig. 1) in die variable Entladestellung C (vergl. Fig. 3 bzw. Fig. 4) geschwenkt. Hierbei werden die Seitenklappen 14 aus der Stellung D in die Stellung E verschwenkt.

Nach dem Öffnen der Heckklappe 13 sowie dem etwa gleichzeitigen Einschalten der Fräswalzen 11 und des Vorschubs des Kratzbodens 6 erfassen die Zinken 12 der rotierenden Fräswalzen 11 das Ladegut. Das Ladegut wird von den Fräswalzen 11 zumindest teilweise gegen die Heckklappe 13 geschleudert. Um nicht nur einen Haufen, sondern eine teppichartige Futterschicht S abzulegen, wird der Erntewagen 1 in eine Vorwärtsbewegung versetzt.

Im weiteren Verlauf wird Futterschicht S auf Futterschicht S gelegt, wobei die Futterschichten S immer wieder von einem schweren Schlepper oder Radlader überfahren werden, damit durch hohe Verdichtung eine hohe Silagequalität entsteht.

Bei herkömmlichen Dosiergerät oder Heckklappen entspricht die Breite des ausgeworfene Futters bzw. einer Futterschicht S der lichten Breite H des Dosiergerätes bzw. der geöffneten Heckklappe. Bei Erntewagen mit Breitbereifung überragen die Räder die Breite des Laderaums bzw. des Dosiergerätes.

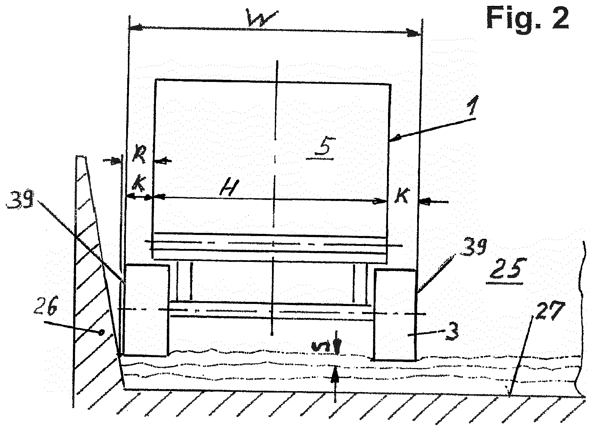

Fig. 2 zeigt eine solche Ausführungsform. Der Laderaum 5 weist eine lichte Breite H auf. Die Reifen 3 weisen äußere Reifenflanken 39 auf. Der Abstand zwischen den äußeren Reifenflanken 39 definiert somit die gesamte Fahrzeugbreite W. Die Räder 3 ragen gegenüber der lichten Breite H beidseitig um einen Überstand K vor. Für eine optimale Entladung in dem Fahrsilo 25 sollen die Räder 3 nahe der Stützwand 26, mit geringem Abstand, berührungslos entlang laufen. Dabei ergeben sich ein Randstreifen R, die bei herkömmlichen Dosiergeräten nur unzureichend mit Futter belegt werden können. Diese Randstreifen R werden durch die erfindungsgemäße Breitverteileinrichtung mit Futter ausgefüllt.

An der Bodenklappe 15 angeordnete Leitschienen 28 können die breitflächige Futterablage unterstützen. Die Leitschienen 21 und/oder 28 können in linearer oder geschwungener Form ausgeführt werden. Die Anzahl kann an die Einsatzbedingungen bzw. das Erntegut angepasst werden.

In den Einsatzfällen, bei denen, bei Verzicht auf die Schwenkbewegung des Winkels α auf die Entlastung des Anlaufs der Fräswalzen 11 verzichtet wird, kann das feste Rahmengestell 30 mit dem schwenkbaren Rahmenteil 31 zu einem einstückigen Rahmengestell zusammengefasst werden.

**Bezugszeichenliste:**

| | | | |
|---|---|---|---|
| 1 | Erntewagen | 34 | Druckfeder |
| 2 | Fahrgestell | 35 | Hydrozylinder |
| 3 | Rad | 36 | Gelenkwellenantrieb |
| 4 | Achsvorrichtung | 37 | Antriebskette |
| 5 | Laderaum | 38 | Antriebskette |
| 6 | Kratzboden | 39 | Reifenflanke |
| 7 | Aufnahmevorrichtung | | |
| 8 | Pressvorrichtung | | |
| 9 | Außenwand | α | Winkel |
| 10 | Dosiergerät | B | Schließstellung |
| 11 | Fräswalze | C | Entladestellung |
| 12 | Zinken | D | Stellung |
| 13 | Heckklappe | E | Stellung |
| 14 | Seitenklappe | F | Stellung |
| 15 | Bodenklappe | G | Stellung |
| 16 | Innenseite | H | lichte Breite |
| 17 | Rückwand | K | Bereich |
| 18 | Hydrozylinder | R | Randstreifen |
| 19, 19' | Rahmen | S | Futterschicht |
| 20 | Hydrozylinder | W | Fahrzeugbreite |
| 21 | Leitschiene | | |
| 22 | Hebel | | |
| 23 | Gelenkachse | | |
| 24 | Gelenk | | |
| 25 | Fahrsilo | | |
| 26 | Stützwand | | |
| 27 | Boden | | |
| 28 | Leitschiene | | |
| 29, 29' | Rahmengestell | | |
| 30 | Rahmenteil (fest) | | |
| 31 | Rahmenteil (schwenkbar) | | |
| 32 | | | |
| 33 | Lagerung | | |

## Patentansprüche

1. Landwirtschaftlicher Erntewagen (1) für Halm- und Blattgut, umfassend:
- ein sich über Räder (3) zum Erdboden hin abstützendes Fahrgestell (2) zur Aufnahme eines Laderaums (5); welcher gebildet ist aus längsseitigen Seitenwänden (9), einer die Seitenwände (9) verbindenden Vorderwand sowie einer schwenkbaren Heckklappe (13) zum Verschließen einer rückwärtigen Entladeöffnung,
- ein im Laderaum (5) vor der Heckklappe (13) angeordnetes Dosiergerät (10) mit wenigstens zwei Fräswalzen (11);
- einen Laderaumboden mit einer angetriebenen Entladeeinrichtung für das rückwärtige Entladen des Halm- und Blattgutes zur Bildung einer Futterschicht (S);
**dadurch gekennzeichnet, dass** eine Breitverteileinrichtung (12; 21; 28) vorgesehen ist, welche Teilmengen des zu entladenden Halm- und Blattgutes in die sich an die lichte Breite (H, H') von Dosiergerät und Laderaum anschließenden Bereiche (K) befördert, so dass die Futterschicht (S) eine Breite aufweist, die der Fahrzeugbreite (W) entspricht.

2. Landwirtschaftlicher Erntewagen (1) nach Anspruch 1, **dadurch gekennzeichnet, dass** die Heckklappe (13) eine Rückwand (17) und eine Bodenklappe (15) umfasst und die Breitverteileinrichtung durch mindestens zwei Leitschienen (21; 28) ausgebildet ist, welche an der Innenseite (16) der Rückwand (17) und/oder der Bodenklappe (15) angeordnet sind.

3. Landwirtschaftlicher Erntewagen (1) nach einem der Ansprüche 1 oder 2, **dadurch gekennzeichnet, dass** die Heckklappe (13) mit einer Anzahl von Leitschienen (21; 28) unterschiedlicher Länge besetzt ist.

4. Landwirtschaftlicher Erntewagen (1) nach einem der Ansprüche 1 bis 3, **dadurch gekennzeichnet, dass** die Leitschienen (21; 28) linear ausgeführt sind.

5. Landwirtschaftlicher Erntewagen (1) nach einem der Ansprüche 1 bis 3, **dadurch gekennzeichnet, dass** die Leitschienen (21; 28) ganz oder teilweise bogenförmig ausgeführt sind.

6. Landwirtschaftlicher Erntewagen (1) nach einem der Ansprüche 1 bis 5, **dadurch gekennzeichnet, dass** die Rückwand (17) Seitenklappen (14) umfasst, welche aus einer Stellung (D) in eine Stellung (E) verschwenkt werden können, in der sie mit der Innenseite (16) der Rückwand (17) eine Ebene bilden.

7. Landwirtschaftlicher Erntewagen (1) nach einem der Ansprüche 1 bis 6, **dadurch gekennzeichnet, dass** die Fräswalzen (11) Zinken (12) mit einer Leitfläche aufweisen, die derart ausgerichtet ist, dass bei Rotation der Fräswalzen (11) von den Zinken (12) erfasstes Halm- und Blattgut zu den Bereichen (K) geleitet wird.

8. Landwirtschaftlicher Erntewagen (1) nach einem der Ansprüche 1 bis 7, **dadurch gekennzeichnet, dass** die auf den Fräswalzen (11) angeordneten Zinken (12) von der Fahrzeugmitte aus gegenläufige Schneckengänge bilden, so dass eine Teilmenge des zu entladenden Halm- und Blattguts zu den Bereichen (K) geleitet wird.

9. Landwirtschaftlicher Erntewagen (1) nach einem der Ansprüche 1 bis 8 **dadurch gekennzeichnet, dass** das Dosiergerät (10) ein schwenkbares Rahmenteil (31) umfasst, welches die Fräswalzen (11) trägt und gegenüber dem Laderaum (5) um einen Winkel (α) schwenkbar ist.

10. Landwirtschaftlicher Erntewagen (1) nach einem der Ansprüche 1 bis 9 **dadurch gekennzeichnet, dass** das Dosiergerät (10) in einem Rahmengestell (29) angeordnet ist, welches mit Schnellverschlüssen mit dem Erntewagen (1) verbunden ist.

11. Landwirtschaftlicher Erntewagen (1) nach Anspruch 10 **dadurch gekennzeichnet, dass** ein Dummy-Rahmengestell vorgesehen ist, welches im Austausch gegen das Rahmengestell (29) in den Erntewagen (1) einbaubar ist.

12. Landwirtschaftlicher Erntewagen (1) nach einem der Ansprüche 1 bis 11, **dadurch gekennzeichnet, dass** das Rahmengestell (29) und/oder das Dummy-Rahmengestell eine Aufnahmeeinrichtung zur Anbindung an ein Tragegerät aufweisen.

## Claims

1. Agricultural harvest wagon (1) for stalk and leaf material, comprising:
- a chassis (2), which is supported towards the soil via wheels (3), for receiving a loading compartment (5) which is formed from side walls (9) on the longitudinal sides, a front wall connecting the side walls (9), and a pivotable tailgate (13) for closing a rear discharge opening,
- a dosing apparatus (10) which is arranged in front of the tailgate (13) in the loading compartment (5) and has at least two milling drums (11);
- a loading compartment floor with a driven discharge device for discharging the stalk and leaf material at the rear in order to form a layer of feed (S);
**characterised in that** a broad distribution device (12; 21; 28) is provided which conveys partial quantities of the stalk and leaf material, which is to be discharged, into the regions (K) adjoining the clear width (H, H') of dosing apparatus and loading compartment such that the layer of feed (S) has a width which corresponds to the vehicle width (W).

2. Agricultural harvest wagon (1) according to Claim 1, **characterized in that** the tailgate (13) comprises a back wall (17) and a floor flap (15), and the broad distribution device is formed by at least two guiding rails (21; 28) which are arranged on the inside (16) of the back wall (17) and/or of the floor flap (15).

3. Agricultural harvest wagon (1) according to either of Claims 1 and 2, **characterized in that** the tailgate (13) is fitted with a number of guiding rails (21; 28) of differing length.

4. Agricultural harvest wagon (1) according to one of Claims 1 to 3, **characterized in that** the guiding rails (21; 28) are of linear design.

5. Agricultural harvest wagon (1) according to one of Claims 1 to 3, **characterized in that** the guiding rails (21; 28) are of entirely or partially curved design.

6. Agricultural harvest wagon (1) according to one of Claims 1 to 5, **characterized in that** the back wall (17) comprises side flaps (14) which can be pivoted from a position (D) into a position (E) in which they form a plane with the inside (16) of the back wall (17).

7. Agricultural harvest wagon (1) according to one of Claims 1 to 6, **characterized in that** the milling drums (11) have prongs (12) with a guiding surface which is oriented in such a manner that stalk and leaf material picked up by the prongs (12) during rotation of the milling drums (11) is conducted to the regions (K).

8. Agricultural harvest wagon (1) according to one of Claims 1 to 7, **characterized in that** the prongs (12) arranged on the milling drums (11) form opposed screw flights starting from the centre of the vehicle, and therefore a partial quantity of the stalk and leaf material, which is to be discharged, is conducted to the regions (K).

9. Agricultural harvest wagon (1) according to one of Claims 1 to 8, **characterized in that** the dosing apparatus (10) comprises a pivotable frame part (31) which bears the milling drums (11) and is pivotable about an angle (α) in relation to the loading compartment (5).

10. Agricultural harvest wagon (1) according to one of Claims 1 to 9, **characterized in that** the dosing apparatus (10) is arranged in a rack (29) which is connected to the harvest wagon (1) with rapid-action fasteners.

11. Agricultural harvest wagon (1) according to Claim 10, **characterized in that** a dummy rack is provided which can be installed as a replacement for the rack (29) in the harvest wagon (1).

12. Agricultural harvest wagon (1) according to one of Claims 1 to 11, **characterized in that** the rack (29) and/or the dummy rack have/has a receiving device for connection to a carrying apparatus.

## Revendications

1. Chariot de récolte agricole (1) pour produit en tiges et en feuilles, comprenant :
- un châssis de roulement (2) s'appuyant au sol par le biais de roues (3), destiné à recevoir un espace de chargement (5) ; lequel est formé de parois latérales longitudinales (9), d'une paroi avant reliant les parois latérales (9) ainsi que d'un volet arrière pivotant (13) pour fermer une ouverture de déchargement arrière,
- un appareil de dosage (10) disposé dans l'espace de chargement (5) devant le volet arrière (13), avec au moins deux rouleaux de coupe (11) ;
- un fond d'espace de chargement avec un dispositif de déchargement entraîné, pour le déchargement vers l'arrière du produit en tiges et en feuilles, pour former une couche de fourrage (S) ;
**caractérisé en ce qu'**un dispositif d'épandage (12 ; 21 ; 28) est prévu, lequel transporte des quantités partielles du produit en tiges et en feuilles à décharger dans les régions (K) se raccordant à la largeur intérieure (H, H') de l'appareil de dosage et de l'espace de chargement de telle sorte que la couche de fourrage (S) présente une largeur qui correspond à la largeur du véhicule (W).

2. Chariot de récolte agricole (1) selon la revendication 1, **caractérisé en ce que** le volet arrière (13) comprend une paroi arrière (17) et un volet de fond (15) et le dispositif d'épandage est réalisé par au moins deux rails directeurs (21 ; 28) qui sont disposés au niveau du côté intérieur (16) de la paroi arrière (17) et/ou du volet de fond (15).

3. Chariot de récolte agricole (1) selon l'une quelconque des revendications 1 ou 2, **caractérisé en ce que** le volet arrière (13) est pourvu d'une pluralité de rails de guidage (21 ; 28) de longueurs différentes.

4. Chariot de récolte agricole (1) selon l'une quelconque des revendications 1 à 3, **caractérisé en ce que** les rails de guidage (21 ; 28) sont réalisés sous forme linéaire.

5. Chariot de récolte agricole (1) selon l'une quelconque des revendications 1 à 3, **caractérisé en ce que** les rails de guidage (21 ; 28) sont réalisés complètement ou en partie sous forme courbe.

6. Chariot de récolte agricole (1) selon l'une quelconque des revendications 1 à 5, **caractérisé en ce que** la paroi arrière (17) comprend des volets latéraux (14) qui peuvent pivoter d'une position (D) dans une position (E), dans laquelle ils forment un plan avec le côté intérieur (16) de la paroi arrière (17).

7. Chariot de récolte agricole (1) selon l'une quelconque des revendications 1 à 6, **caractérisé en ce que** les rouleaux de coupe (11) présentent des dents (12) avec une surface directrice qui est orientée de telle sorte que lors de la rotation des rouleaux de coupe (11), le produit en tiges et en feuilles saisi par les dents (12) soit guidé vers les régions (K).

8. Chariot de récolte agricole (1) selon l'une quelconque des revendications 1 à 7, **caractérisé en ce que** les dents (12) disposées sur les rouleaux de coupe (11) forment, à partir du centre du véhicule, des vis sans fin de sens opposés de telle sorte qu'une quantité partielle du produit en tiges et en feuilles à décharger soit guidée vers les régions (K).

9. Chariot de récolte agricole (1) selon l'une quelconque des revendications 1 à 8, **caractérisé en ce que** l'appareil de dosage (10) comprend une partie de cadre pivotante (31) qui porte les rouleaux de coupe (11) et qui peut pivoter d'un angle (α) par rapport à l'espace de chargement (5) .

10. Chariot de récolte agricole (1) selon l'une quelconque des revendications 1 à 9, **caractérisé en ce que** l'appareil de dosage (10) est disposé dans un châssis-cadre (29) qui est raccordé par des fermetures rapides au chariot de récolte (1).

11. Chariot de récolte agricole (1) selon la revendication 10, **caractérisé en ce qu'**un châssis-cadre de remplacement est prévu, lequel peut être installé dans le chariot de récolte (1) à la place du châssis-cadre (29).

12. Chariot de récolte agricole (1) selon l'une quelconque des revendications 1 à 11, **caractérisé en ce que** le châssis-cadre (29) et/ou le châssis-cadre de remplacement présentent un dispositif de réception destiné à être raccordé à un appareil de support.
